# EUROPEAN PATENT SPECIFICATION

(11) **EP 1 467 536 B1**
(45) Date of publication and mention of the grant of the patent: **20.10.2004**
(21) Application number: 03010396.4
(22) Date of filing: 08.05.2003
(51) Int. Cl.: H04M 1/02, H04M 1/22

(54) **Device for state-dependently adjusting the appearance of the cover of a portable electronic device, and cover therefore**
Vorrichtung zur statusabhängigen Einstellung des Erscheinen der Abdeckung eines tragbaren elektronischen Gerätes, und Abdeckung dafür
Appareil pour ajuster l'apparence du couvercle d'un appareil électronique portable en fonction de son état, et couvercle correspondant

(43) Date of publication of application: 13.10.2004
(73) Proprietor: SIEMENS AKTIENGESELLSCHAFT, 80333 München (DE)
(72) Inventor: Santa Cruz, Carmen, 9000 Aalborg (DK)

(56) References cited:
- EP-A- 0 878 942
- WO-A-00/78012
- WO-A-01/86921
- WO-A-02/41607
- US-B1- 6 278 887
- US-B1- 6 292 674
- US-B1- 6 349 221

## Description

Users of portable mobile phones are concerned about the design and appearance of their devices. Consequently, a lot of emphasis has been put on the design of such devices. The miniaturization of portable mobile phones has been a characterizing phenomenon for the field for several years already. An emerging trend of so called pendant phones, such as jewel-like or necklace phones sets even more challenges for the design industry.

In order to make the appearance of the portable mobile phone aesthetically more pleasant, it is desirable to change the color of display between active and inactive states, such as in the Siemens S55 mobile phone. It is possible to darken the liquid crystal display when the mobile phone is in an inactive state, and brighten the display when the mobile phone is in use.

One drawback of such a solution is that the contents of the liquid chrystal display are at least partially visible, resulting in an optically non-uniform surface. It would be more complicated if the contents shown on the display were replaced with a screen saver whenever the display is darkened. Further, it requires difficult design considerations to make the color of the dark display screen match the color of the rest of the phone. In some cases this might even require illuminating the screen in idle mode, thus increasing energy consumption.

United States patent 6,349,221 B1 discloses an electronic device, comprising a device for state-dependently adjusting the appearance of a cover of the electronic device, the cover comprising electrochromic substance, the device further comprising: means responsive to a state information, for changing the electrochromic substance: to a transparent state when the electronic device is in an active mode; and to a opaque state when the electronic device is in idle mode.

WO 0241607 A1 discloses an exchangeable cover for a mobile telephone. The cover comprises an electronic memory containing data which can be imparted to the mobile telephone core via electrical contacts.

It is an object of the present invention to bring about a device for state-dependently adjusting the appearance of the exchangeable cover which comprises electrochromic substance of a portable electronic device, and such an exchangeable cover. This enables new and fascinating constuction possibilities for different portable electronic devices. This object can be achieved as described in any of the independent claims.

The dependent claims describe some advantageous embodiments of the present invention.

A further object of the present invention is to use the device and/or method for adjusting the appearance of a display cover, using which the replacement of the display contents with a screen saver can be made redundant. Further, continuously illuminating the screen in idle mode is not necessary any more in order to achieve a desired look for the device.

An advantage of the present invention is that portable electronic devices which utilize the present invention can be designed to include more appealing technical features.

Different modules, such as the display or keys can then be more easily integrated into the design of the device.

When a state of the portable electronic device is triggered by a sensor, even more advantages can be achieved. For example, touching a sensor by hand or finger can make the display visible or cover transparent. Similarly, the user can shake his/her portable electronic device "alive", i.e. a physical movement such as variating acceleration detected by a sensor triggers the state of the electronic device according to which the state of the cover is adjusted.

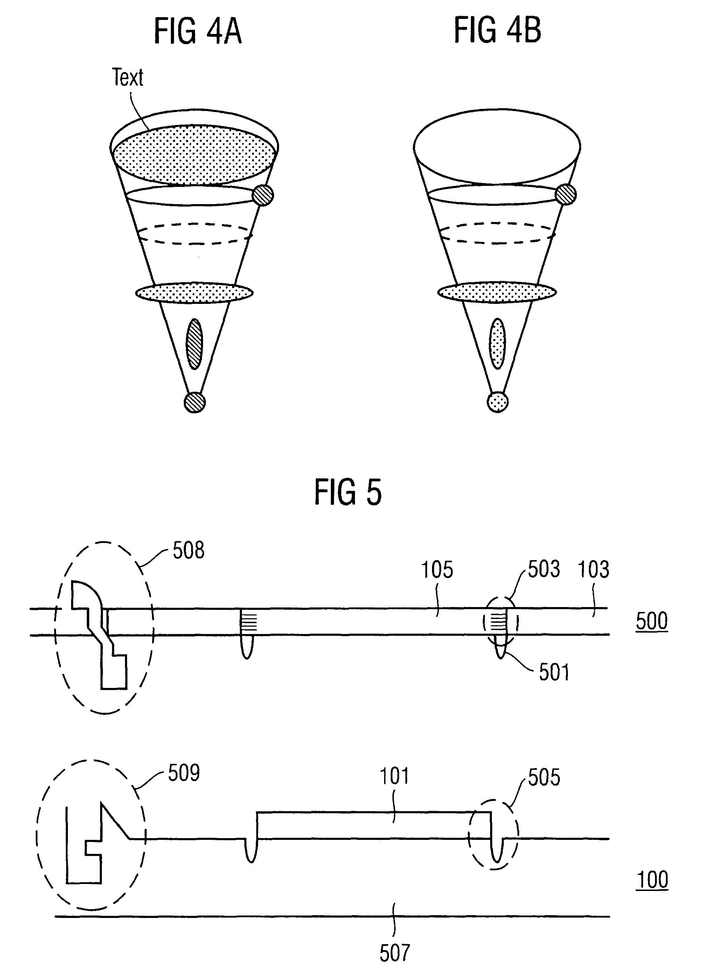

In the following the invention is described in more detail with reference to the accomplished examples shown in Figure 5 of the appended drawings, of which:
Figure 1 shows a schematic structure of the device for state-dependently adjusting the cover of a portable electronic device;
Figures 2A, 3A, and 4A show part of the cover in a substantially transparent state;
Figures 2B, 3B, and 4B show part of the cover in a substantially opaque state; and
Figure 5 shows a detachable cover.

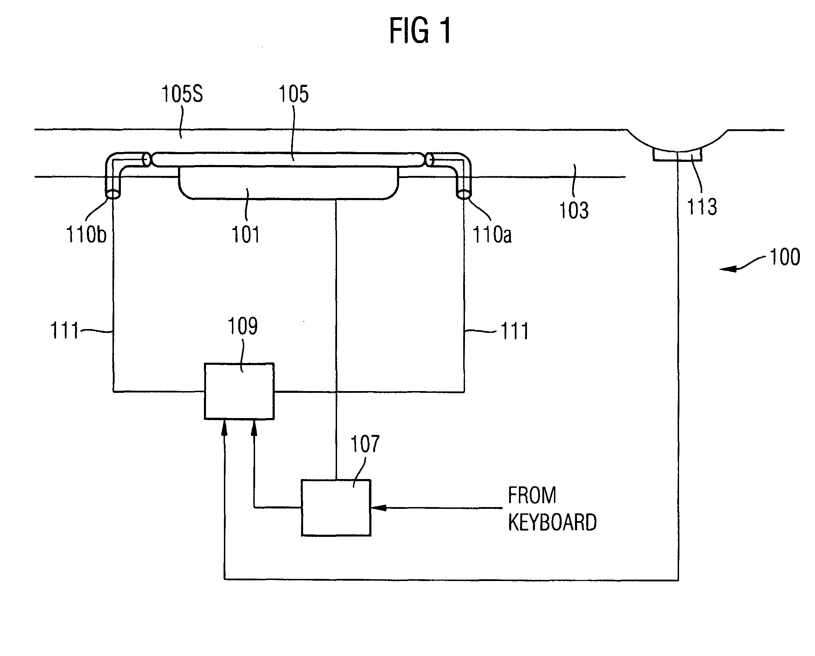

Figure 1 shows a schematic structure comprising electrochromic substance 105 in a cover 103 of a mobile phone 100. The electrochromic substance 105 is located on top of a display 101. The display 101 can be a traditional liquid crystal display, and it is normally lit with LEDs or other light sources.

The appearance of the cover 103 is what the cover 103 or at least part thereof looks like. It may be the colour of the cover 103. By the development of materials technology, the appearance can be understood to cover even surface structure, the states being then either smooth or rough, for example.

The cover 103 does not need to fully consist of the electrochromic substance 105. For example, the surface 105S can be made of transparent plastic.

As an alternative, the cover 103 may comprise the electrochromic substance 105 elsewhere except on the top of the display 101, so that there is just be some transparent plastic on the display. Then the display would be transparent and other parts of the cover would comprise a layer of electrochromic substance.

The electrochromic substance 105 is set to a substantially transparent state when the electronic device 100 is in an active mode; and to a substantially opaque state when the electronic device 100 is in idle mode.

Said inactive state can be activated after a predefined period after having received a user input, such as from the keyboard of the mobile phone. The control circuit 107, typically a central processing unit, detects the input from the keyboard and controls the display 101. It sends control information to a power circuitry 109. In one embodiment, this include turning a switch from a first position to a second position.

The voltage generator 109 raises in the wires 111 a voltage over the electrochromic substance 105. The electrochromic substance 105 undergoes a transition, depending on the voltage, which causes changing of the transmission in the visible region of the spectrum.

There may be openings or conduits 110a, 110b in the cover 103 for the wires 111. Alternatively, the wires can be fixed at ends of the display 101 for avoiding the visibility of the wires 111.

The current changes the state of the electrochromic substance 105, depending on its direction, to a substantially transparent or to a substantially opaque state.

Said inactive state can also be activated in response to a touch sensor 113 output showing that the electronic device 100 is not used.

The electrochromic substance 105 may be a contrast plate as disclosed in U.S. patent 6,344,918 B1, or an element as described in U.S. patent 5,847,858. Suitable materials for the electrochromic substance 105 are disclosed, in addition to the previous references, in published German patent application DE 199 14 304 Al.

Also other possibilities for the electrochromic substance 105, such as nanocrystalline semiconductor films, exist. One of them has been at the time of writing disclosed in http://www.chemsoc.org/exemplarchem/entries/2002/etan/Webpage s/applications%20ed%20bottom.htm.

Different colours can be obtained, in the manner described in publications at the time of writing referred to in http://composite.miningco.com/library/PR/2001/blufll.htm.

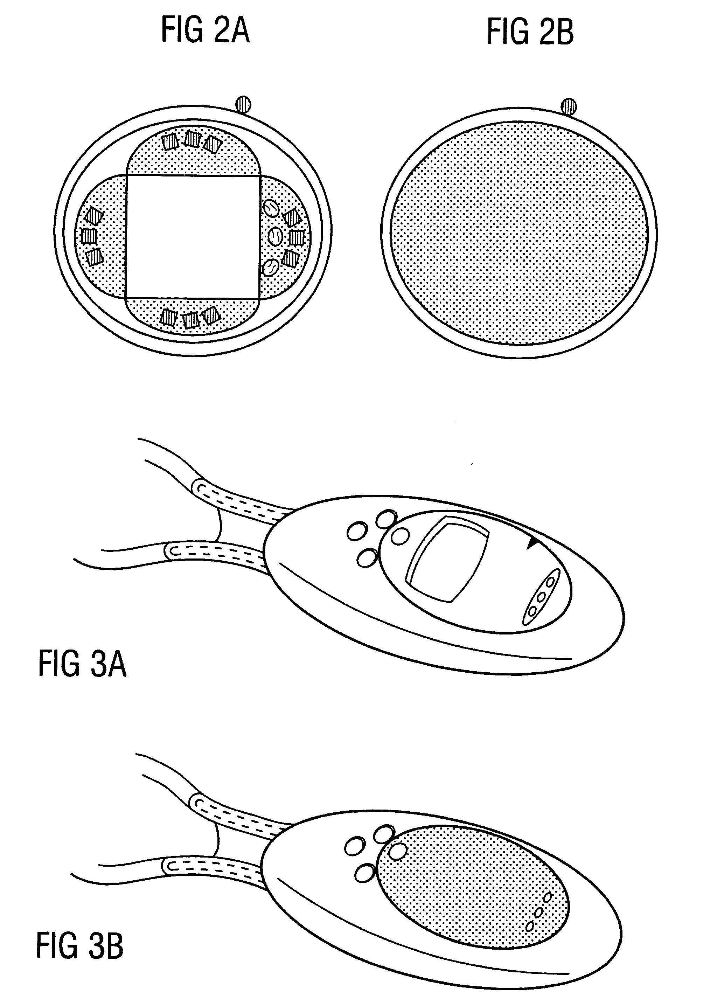

Figures 2A, 3A, and 4A show the display cover in a substantially transparent state. By substantially transparent is meant a transmission of over 80%.

Figures 2B, 3B, and 4B show the display cover in a substantially opaque state. By substantially opaque is meant a transmission of less than 15%.

According to one aspect of the present invention, a contrast plate over a display is darkened when the mobile phone is turned to idle mode, and changed to transparent, when the mobile terminal is turned to an active mode.

If the electrochromic substance 105 can have only one colour, then it may be selected depending on the desired color of the cover of the mobile phone.

If the electrochromic substance 105 can have multiple colours, depending on the voltage over the electrochromic substance, for example, then the voltage can be selected depending on the desired color of the cover of the mobile phone so that the resulting screen cover on a non-illuminated display almost equals to the colour of the cover.

Figure 5 shows the electrochromic substance 105 as part of an exchangeable cover 500. The electrochromic substance 105 is joined to the cover 103 part, and wires 503 on both sides of the electrochromic substance 105 are used to set up an electric field over the electrochromic substance 105. The wires are further connected to a connector 501, which makes an electrical contact with a counterpart 505 fitted on the printed circuit board 507 close to the display 101. The releasing mechanism can be a snap-fit mechanism, having a release switch 508 in the exchangeable cover 500 and a counterpart 509 either on the PCB 507 or some other part of the cover.

One more aspect of the present invention is that the toggling of the state of the electrochromic substance 105 is triggered in response to a voluntary user action. This can be done by using touch sensors 113, tilt sensors, or shaking sensors such as those implemented using accelerometers as an input source for the control circuit 107 which then further instructs the electochromic substance 105. The user can "shake the electronic device" between active and inactive states, this resulting in the change of the transparency of the display cover. Further, the control circuit 107 can control a keyboard lock as well by the input of the sensors.

The electronic device need not be a portable mobile phone but can be any electronic device, such as a watch or a portable music (especially CD or MP3) player. Then the whole cover, possibly on one or both sides, may have a display cover of electrochromic substance 105. The display cover may be made depending on the mode of the device, such as being transparent when a CD is rotating, and opaque when the device is not in use.

## Claims

1. An electronic device (100), comprising a device (107, 109) for state-dependently adjusting the appearance of a cover (103) of the electronic device (100), the cover (103) comprising electrochromic substance (105), the device (107, 109) further comprising: means (107) responsive to a state information, for changing the electrochromic substance (105):
- to a transparent state when the electronic device (100) is in an active mode; and
- to a opaque state when the electronic device (100) is in idle mode;
**characterized in that**: said cover (103) is removable and includes electrical connectors (501) to connect the electrochromic substance (105) to the electronic device (100).

2. An electronic device (100) according to claim 1, **wherein**:
said state information is obtained from a touch sensor (113).

3. An electronic device (100) according to claim 1 or 2, **wherein**: said state information is obtained from a tilt sensor.

4. An electronic device (100) according to claim 1, 2, or 3, **wherein**: said state information is obtained from a shaking sensor output.

5. An electronic device (100) according to any one of claims 1 to 4, **wherein**: said cover (103) forms a cover of a display (101).

6. An electronic device (100) according to any one of the preceding claims, **wherein**: said electronic device (100) is a mobile terminal.

7. An electronic device (100) according to claim 1, wherein: said device (100) is a CD player, and **wherein**: the means (107) responsive to a state information, for changing the electrochromic substance (105) are adapted to change the electrochromic substance (105):
- to transparent state when a CD is rotating; and to opaque state when the electronic device (100) is not used.

8. A removable cover (103) for an electronic device (100), comprising electrical connectors (501) to connect the removable cover (103) to the electronic device (100), **characterized in that**: said removable cover (103) further comprises electrochromic substance (105) and means responsive to a state information for changing the electrochromic substance (105) to a transparent state in active mode and to an opaque state in idle mode.

## Patentansprüche

1. Elektronisches Gerät (100), das ein Gerät (107, 109) für das zustandabhängige Verändern des Aussehens eines Covers (103) des elektronischen Gerätes (100) beinhaltet, wobei das Cover (103) eine elektrochrome Substanz (105) beinhaltet und das Gerät (107, 109) weiterhin Folgendes umfasst: ein Mittel (107), das auf eine Zustandsinformation reagiert, um die elektrochrome Substanz (105) wie folgt zu ändern:
- in einen durchsichtigen Zustand, wenn das elektronische Gerät (100) in einem Aktivmodus ist; und
- in einen undurchsichtigen Zustand, wenn das elektronische Gerät (100) im Passivmodus ist;
**dadurch gekennzeichnet, dass**: besagtes Cover (103) auswechselbar ist und Elektrostecker (501) beinhaltet, um die elektrochrome Substanz (105) an das elektronische Gerät (100) anzuschließen.

2. Elektronisches Gerät (100) nach Anspruch 1, bei dem: besagte Zustandsinformation von einem berührungsempfindlichen Sensor (113) stammt.

3. Elektronisches Gerät (100) nach Anspruch 1 oder 2, bei dem: besagte Zustandsinformation von einem Kippsensor stammt.

4. Elektronisches Gerät (100) nach Anspruch 1, 2 oder 3, bei dem: besagte Zustandsinformation von einem Schüttelsensorausgang stammt.

5. Elektronisches Gerät (100) nach einem der Ansprüche 1 bis 4, bei dem: besagtes Cover (103) einen Deckel für einen Bildschirm (101) bildet.

6. Elektronisches Gerät (100) nach einem der vorhergehenden Ansprüche, bei dem: besagtes elektronisches Gerät (100) ein Mobilterminalgerät ist.

7. Elektronisches Gerät (100) nach Anspruch 1, bei dem: besagtes elektronisches Gerät (100) ein CD-Player ist und bei dem: das Mittel (107) auf eine Zustandsinformation reagiert, um die elektrochrome Substanz (105) zu ändern, und so angepasst ist, dass die elektrochrome Substanz (105):
- in einen durchsichtigen Zustand geändert wird, wenn eine CD läuft; und in einen undurchsichtigen Zustand, wenn das elektronische Gerät (100) nicht benutzt wird.

8. Auswechselbares Cover (103) für ein elektronische Gerät (100), der elektrische Stecker (501) beinhaltet, um das auswechselbare Cover (103) an das elektronische Gerät (100) anzuschließen, **dadurch gekennzeichnet, dass**: besagtes auswechselbares Cover (103) weiterhin eine elektrochrome Substanz (105) und ein Mittel beinhaltet, das auf eine Zustandsinformation reagiert, um die elektrochrome Substanz (105) im Aktivmodus in einen durchsichtigen Zustand zu ändern und im Passivmodus in einen undurchsichtigen Zustand zu ändern.

## Revendications

1. Dispositif électronique (100), comprenant un dispositif (107, 109) pour ajuster en fonction de l'état l'apparence d'un couvercle (103) du dispositif électronique (100), le couvercle (103) comprenant une substance électrochrome (105), le dispositif (107, 109) comprenant en outre : un moyen (107) sensible à une information d'état, pour faire passer la substance électrochrome (105) :
- à un état transparent lorsque le dispositif électronique (100) est dans un mode actif; et
- à un état opaque lorsque le dispositif électronique (100) est en mode repos;
**caractérisé en ce que** : ledit couvercle (103) est amovible et comprend des connecteurs électriques (501) pour relier la substance électrochrome (105) au dispositif électronique (100).

2. Dispositif électronique (100) selon la revendication 1, **dans lequel** : ladite information d'état est obtenue à partir d'un capteur tactile (113).

3. Dispositif électronique (100) selon la revendication 1 ou 2, **dans lequel :** ladite information d'état est obtenue à partir d'un capteur d'inclinaison.

4. Dispositif électronique (100) selon la revendication 1, 2 ou 3, dans lequel : ladite information d'état est obtenue à partir d'un signal de sortie de capteur d'agitation.

5. Dispositif électronique (100) selon l'une quelconque des revendications 1 à 4, dans lequel : ledit couvercle (103) forme un cache d'un écran d'affichage (101).

6. Dispositif électronique (100) selon l'une quelconque des revendications précédentes, **dans lequel** : ledit dispositif électronique (100) est un terminal mobile.

7. Dispositif électronique (100) selon la revendication 1, dans lequel : ledit dispositif (100) est un lecteur de CD, et dans lequel : le moyen (107) sensible à une information d'état, pour changer la substance électrochrome (105), est conçu pour faire passer la substance électrochrome (105) :
- à un état transparent lorsqu'un CD tourne; et à un état opaque lorsque le dispositif électronique (100) n'est pas utilisé.

8. Couvercle amovible (103) pour un dispositif électronique (100), comprenant des connecteurs électriques (501) pour relier le couvercle amovible (103) au dispositif électronique (100), **caractérisé en ce que** : ledit couvercle amovible (103) comprend en outre une substance électrochrome (105) et un moyen sensible à une information d'état pour faire passer la substance électrochrome (105) à un état transparent en mode actif et à un état opaque en mode repos.
